# EUROPEAN PATENT APPLICATION

(11) **EP 4 625 258 A1**
(43) Date of publication of application: **01.10.2025**
(21) Application number: 24200924.9
(22) Date of filing: 17.09.2024
(51) Int. Cl.: G06N 3/08

(54) **METHOD AND SYSTEM FOR CLASSIFICATION**

(30) Priority: 28.03.2024 US 202418620288
(71) Applicant: II-VI Delaware, Inc., Wilmington, DE 19890 (US)
(72) Inventor: KÜHL, Patrick, Wilmington, 19890 (US)
(74) Representative: Schmidt, Christian

(57) **Abstract**

The present disclosure may comprise a classification method and system, to data at a pre-trained neural network. The pre-trained neural network may determine one or more confidence levels based on the data. Each of the one or more confidence levels may be associated with a class and an evaluation band. If at least one of the determined one or more confidence levels falls within its associated evaluation band the determined one or more confidence levels and the data may be collected for reclassification and adapting the pre-trained neural network by transfer learning.

## Description

### TECHNICAL FIELD

The present disclosure generally relates to a method and system for classification.

### BACKGROUND

Aspects of the present disclosure relate to a method and system for classification. Various issues may exist with conventional solutions for classification. In this regard, conventional systems and methods for classification may be costly, cumbersome, and/or inefficient.

Limitations and disadvantages of conventional systems and methods will become apparent to one of skill in the art, through comparison of such approaches with some aspects of the present methods and systems set forth in the remainder of this disclosure with reference to the drawings.

### BRIEF SUMMARY OF THE DISCLOSURE

Shown in and/or described in connection with at least one of the figures, and set forth more completely in the claims is a method and system for classification.

These and other advantages, aspects and novel features of the present disclosure, as well as details of illustrated embodiments thereof, will be more fully understood from the following description and drawings.

### BRIEF DESCRIPTION OF THE DRAWINGS

The various features and advantages of the present disclosure may be more readily understood with reference to the following detailed description taken in conjunction with the accompanying drawings, wherein like reference numerals designate like structural elements.
FIG. 1 is a flowchart illustrating a classification method, according to some embodiments of the present disclosure.
FIG. 2 is a flowchart further illustrating the classification method from FIG. 1, according to some embodiments of the present disclosure.
FIG. 3 is a block diagram illustrating a classification system, according to some embodiments of the present disclosure.
FIG. 4 is a flowchart illustrating a classification method, according to some embodiments of the present disclosure.

### DESCRIPTION

The following discussion provides various examples of a method and system for classification. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Embodiments of the present disclosure may comprise a classification method, the method comprising receiving data at a pre-trained neural network. Embodiments may also comprise determining at the pre-trained neural network one or more confidence levels based on the data. In accordance with various embodiments, each of the one or more confidence levels may be associated with a class and an evaluation band.

Embodiments may also comprise comparing the determined one or more confidence levels with their associated evaluation bands. Embodiments may also comprise collecting the determined one or more confidence levels and the data for reclassification, if at least one of the determined one or more confidence levels falls within its associated evaluation band.

Embodiments may also comprise upon reclassification, adapting the pre-trained neural network by transfer learning using the reclassification. Embodiments may also comprise outputting the class associated with the exceeding one or more determined confidence levels, if at least one of the determined one or more confidence levels may be higher than its associated evaluation band. Embodiments may also comprise collecting the confidence levels and the data as unclassifiable, if all of the one or more confidence levels may be lower than the associated evaluation band.

In accordance with various embodiments, the reclassification may be a machine-based reclassification or a human reclassification. In accordance with various embodiments, the method may comprise preprocessing the data before the determining of the one or more confidence levels. In accordance with various embodiments, the pre-trained neural network may be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.

In accordance with various embodiments, the method may comprise determining the one or more confidence levels by determining a probability that the data belongs to the associated class. In accordance with various embodiments, the one or more classes may be mutually exclusive. In accordance with various embodiments, the one or more evaluation bands may be defined by a deviation from a nominal threshold.

In accordance with various embodiments, the method may comprise generating a new class based on the transfer learning. The method may further comprise training the new class on the data. Embodiments may also comprise adapting the pre-trained neural network by transfer learning that may comprise feeding features to the pre-trained neural network, and/or fine-tuning one or more layers of the pre-trained neural network.

Embodiments may also comprise adapting the pre-trained neural network by transfer learning that may comprise training the pre-trained neural network on the reclassified data. Embodiments may also comprise adapting the pre-trained neural network by transfer learning that may comprise optimizing the pre-trained neural network for a performance indicator. In accordance with various embodiments, the performance indicator may be a learning rate, a rate of false positives, a measure of accuracy, a recall rate, an error function, and/or an inference time.

In accordance with various embodiments, the method may comprise analyzing the unclassifiable data and the associated confidence levels for patterns that suggest novel classes for the unclassifiable data. In accordance with various embodiments, the method may comprise modifying the evaluation bands to adapt the classes based on the data.

Embodiments of the present disclosure may also comprise a classification system, the system comprising a pre-trained neural network to receive data. Embodiments may also comprise determining at the pre-trained neural network one or more confidence levels based on the data. In accordance with various embodiments, each of the one or more confidence levels may be associated with a class and an evaluation band.

Embodiments may also comprise comparing the determined one or more confidence levels with their associated evaluation bands. Embodiments may also comprise a reclassification unit. If at least one of the determined one or more confidence levels falls within its associated evaluation band at the reclassification unit, the system may also comprise collecting the determined one or more confidence levels and the data for reclassification at the reclassification unit.

Embodiments may also comprise upon reclassification, adapting the pre-trained neural network by transfer learning using the reclassification. Embodiments may also comprise outputting the class associated with the exceeding one or more determined confidence levels, if at least one of the determined one or more confidence levels may be higher than its associated evaluation band. Embodiments may also comprise collecting the confidence levels and the data as unclassifiable, if all of the one or more confidence levels may be lower than the associated evaluation band.

In accordance with various embodiments, the reclassification may be a machine-based reclassification or a human reclassification. In accordance with various embodiments, the system may comprise preprocessing the data before the determining of the one or more confidence levels. In accordance with various embodiments, the pre-trained neural network can be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.

In accordance with various embodiments, the system may comprise determining the one or more confidence levels by determining a probability that the data belongs to the associated class. In accordance with various embodiments, the one or more classes may be mutually exclusive. In accordance with various embodiments, the one or more evaluation bands may be defined by a deviation from a nominal threshold.

In accordance with various embodiments, the system may be configured for generating a new class based on the transfer learning. Further, the system may be configured for training the new class on the data. Embodiments may also comprise adapting the pre-trained neural network by transfer learning that may comprise feeding features to the pre-trained neural network, and/or fine-tuning one or more layers of the pre-trained neural network.

Embodiments may also comprise adapting the pre-trained neural network by transfer learning that may comprise training the pre-trained neural network on the reclassified data. Embodiments may also comprise adapting the pre-trained neural network by transfer learning that may comprise optimizing the pre-trained neural network for a performance indicator. In accordance with various embodiments, the performance indicator may be a learning rate, a rate of false positives, a measure of accuracy, a recall rate, an error function, and/or an inference time.

In accordance with various embodiments, the system may comprise analyzing the unclassifiable data and the associated confidence levels for patterns that suggest novel classes for the unclassifiable data. In accordance with various embodiments, the system may comprise modifying the evaluation bands to adapt the classes based on the data.

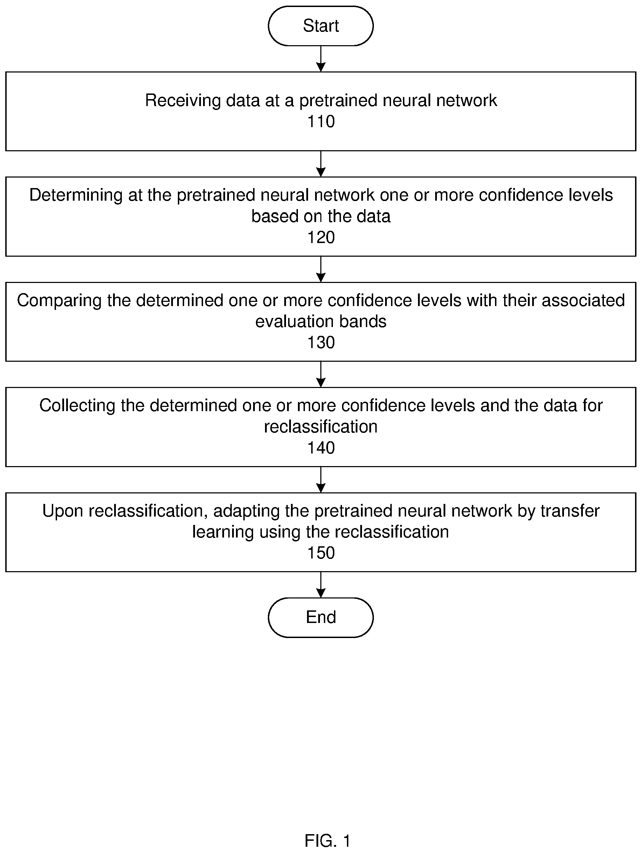

Referring now to FIG. 1, FIG. 1 is a flowchart that describes a classification method, according to some embodiments of the present disclosure. In some embodiments, at 110, the classification method may include receiving data at a pre-trained neural network. At 120, the classification method may include determining at the pre-trained neural network one or more confidence levels based on the data. At 130, the classification method may include comparing the determined one or more confidence levels with their associated evaluation bands. At 140, the classification method may include collecting the determined one or more confidence levels and the data for reclassification. At 150, the classification method may include, upon reclassification, adapting the pre-trained neural network by transfer learning using the reclassification.

In some embodiments, each of the one or more confidence levels may be associated with a class and an evaluation band. If at least one of the determined one or more confidence levels may fall within its associated evaluation band, the classification method may include performing one or more additional steps. If at least one of the determined one or more confidence levels may be higher than its associated evaluation band, the class associated with the exceeding one or more determined confidence levels may be output. If all of the one or more confidence levels may be lower than the associated evaluation band, the confidence levels and the data may be collected as unclassifiable.

In some embodiments, the reclassification may be a machine-based reclassification or a human reclassification. In some embodiments, the method may include preprocessing the data before the determining of the one or more confidence levels. In some embodiments, the pre-trained neural network can be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.

In some embodiments, the method may include determining the one or more confidence levels by determining a probability that the data belongs to the associated class. In some embodiments, the one or more classes may be mutually exclusive. In some embodiments, the one or more evaluation bands may be defined by a deviation from a nominal threshold. In some embodiments, adapting the pre-trained neural network by transfer learning comprises feeding features to the pre-trained neural network, and/or fine-tuning one or more layers of the pre-trained neural network.

In some embodiments, adapting the pre-trained neural network by transfer learning comprises training the pre-trained neural network on the reclassified data. In some embodiments, adapting the pre-trained neural network by transfer learning comprises optimizing the pre-trained neural network for a performance indicator. The performance indicator may be a learning rate, a rate of false positives, a measure of accuracy, a recall rate, an error function, and/or an inference time. In some embodiments, the method may include analyzing the unclassifiable data and the associated confidence levels for patterns that suggest novel classes for the unclassifiable data. In some embodiments, the method may comprise modifying the evaluation bands to adapt the classes based on the data.

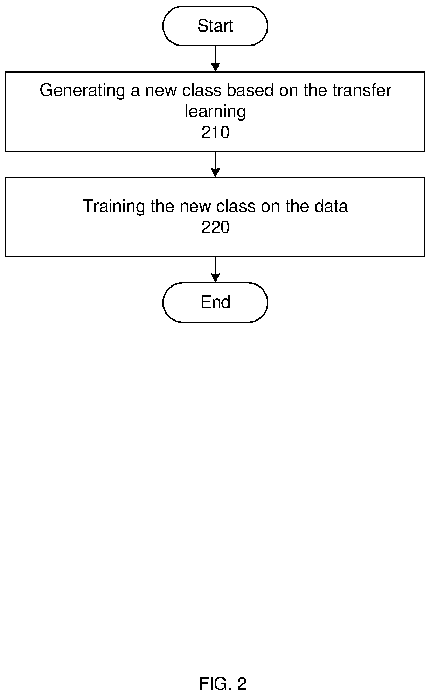

FIG. 2 is a flowchart that further describes the classification method from FIG. 1, according to some embodiments of the present disclosure. In some embodiments, at 210, the method may include generating a new class based on the transfer learning. At 220, the generating may include training the new class on the data.

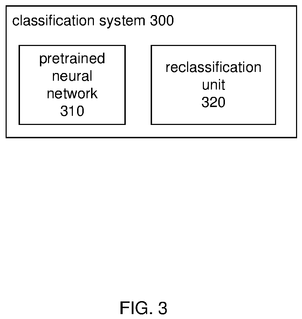

FIG. 3 is a block diagram that describes a classification system 300, according to some embodiments of the present disclosure. In some embodiments, the classification system 300 may include a pre-trained neural network 310 to receive data and a reclassification unit 320. At the pre-trained neural network 310 one or more confidence levels may be determined based on the data. Each of the one or more confidence levels may be associated with a class and an evaluation band. The determined one or more confidence levels may be compared with their associated evaluation bands.

In some embodiments, if at least one of the determined one or more confidence levels may fall within its associated evaluation band at the reclassification unit 320, the determined one or more confidence levels and the data may be collected for reclassification. Upon reclassification, the pre-trained neural network 310 may be adapted by transfer learning using the reclassification. If at least one of the determined one or more confidence levels may be higher than its associated evaluation band, the class associated with the exceeding one or more determined confidence levels may be output. If all of the one or more confidence levels may be lower than the associated evaluation band, the confidence levels and the data may be collected as unclassifiable.

In some embodiments, the reclassification may be a machine-based reclassification or a human reclassification. In some embodiments, the data may be preprocessed before the determining of the one or more confidence levels. In some embodiments, the pre-trained neural network 310 can be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.

In some embodiments, determining the one or more confidence levels may be achieved by determining a probability that the data may belong to the associated class. In some embodiments, the one or more classes may be mutually exclusive. In some embodiments, the one or more evaluation bands may be defined by a deviation from a nominal threshold. In some embodiments, generating a new class based on the transfer learning may be achieved by training the new class on the data.

In some embodiments, the pre-trained neural network 310 may be adapted by transfer learning, comprising feeding features to the pre-trained neural network 310, and/or fine-tuning one or more layers of the pre-trained neural network 310. In some embodiments, the pre-trained neural network 310 may be adapted by transfer learning on the reclassified data. In some embodiments, the pre-trained neural network 310 may be adapted by transfer learning comprising optimizing the pre-trained neural network 310 for a performance indicator. The performance indicator may be a learning rate, a rate of false positives, a measure of accuracy, a recall rate, an error function, and/or an inference time. In some embodiments, the unclassifiable data may be analyzed by searching the associated confidence levels for patterns that suggest novel classes for the unclassifiable data. In some embodiments, the system may comprise modifying the evaluation bands to adapt the classes based on the data.

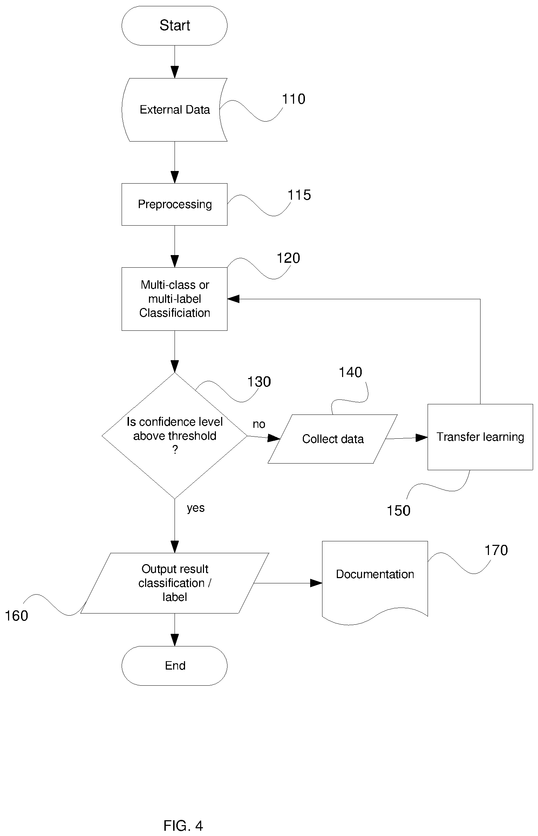

FIG. 4 is a flowchart illustrating a classification method, according to some embodiments of the present disclosure. At 110, external data for classification may be received at a pre-trained neural network. In accordance with various embodiments of the present disclosure, at 115, the data may be pre-processed. Pre-processing may comprise operations that may assist in efficient and accurate classification at the pre-trained neural network. Preprocessing may comprise, for example, edge detection in images, or some normalization of values. As will be understood by the person skilled in the art, the present disclosure is not limited in this respect. At 120, the pre-trained neural network may determine a confidence level in classifying/labeling the received data. For each class, there may be an associated evaluation band that may be put in relation to the confidence levels determined. Generally, there may be a range of the confidence level above an evaluation band where the confidence of correct classification is high. There may also be a range of the confidence levels below the evaluation band where the confidence is low and a classification may not be desirable. When the confidence levels fall within the evaluation band, the confidence levels may be too low to be directly classified but also too high to be discarded. In these instances, the data and the confidence level may be used for further training of the pre-trained neural network at 140, 150.

Correspondingly, at 130, if at least one of the determined one or more confidence levels, associated with a class, may fall within its associated evaluation band, the determined confidence levels and the data may be collected at 140 for reclassification. Upon reclassification, the data and confidence level may be used to adapt the pre-trained neural network by transfer learning at 150. The results of the transfer learning may be fed back to the pre-trained neural network at 120 to improve the neural network, or to generate new classes.

Alternatively, at 130, if at least one of the determined one or more confidence levels is higher than the associated evaluation band, the class associated with such a confidence level is output as a valid classification at 160. However, if at 130, all determined confidence levels may be lower than the evaluation band, the associated data and confidence level may be collected as unclassifiable at 160. The results at 160 may be documented at 170.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. The aspects are:
1. A classification method, said method comprising:
   receiving data at a pre-trained neural network;
   determining at said pre-trained neural network one or more confidence levels based on said data, wherein each of said one or more confidence levels is associated with a class and an evaluation band;
   comparing said determined one or more confidence levels with their associated evaluation bands;
   if at least one of said determined one or more confidence levels falls within its associated evaluation band:
      collecting said determined one or more confidence levels and said data for reclassification; and
      upon reclassification, adapting said pre-trained neural network by transfer learning using said reclassification;
   if at least one of said determined one or more confidence levels is higher than its associated evaluation band, said class associated with said exceeding one or more determined confidence levels is output;
   if all of said one or more confidence levels are lower than said associated evaluation band, said confidence levels and said data are collected as unclassifiable.
2. The method of aspect 1, wherein said reclassification is a machine-based reclassification or a human reclassification.
3. The method of aspect 1, comprising preprocessing said data before said determining of said one or more confidence levels;
4. The method of aspect 1, wherein said pre-trained neural network can be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.
5. The method of aspect 1, comprising determining said one or more confidence levels by determining a probability that said data belongs to said associated class.
6. The method of aspect 1, wherein said one or more classes may be mutually exclusive.
7. The method of aspect 1, wherein said one or more evaluation bands may be defined by a deviation from a nominal threshold.
8. The method of aspect 1, comprising generating a new class based on said transfer learning comprising training said new class on said data.
9. The method of aspect 1, wherein adapting said pre-trained neural network by transfer learning comprises feeding features to said pre-trained neural network, and/or fine-tuning one or more layers of said pre-trained neural network.
10. The method of aspect 1, wherein adapting said pre-trained neural network by transfer learning comprises training said pre-trained neural network on said reclassified data.
11.The method of aspect 1, wherein adapting said pre-trained neural network by transfer learning comprises optimizing said pre-trained neural network for a performance indicator, wherein said performance indicator is a learning rate, a rate of false positives, a measure of accuracy, a recall rate, an error function, and/or an inference time.
12. The method of aspect 1, comprising analyzing said unclassifiable data and said associated confidence levels for patterns that suggest novel classes for said unclassifiable data.
13. The method of aspect 1, modifying said evaluation bands to adapt said classes based on said data.
14.A classification system, said system comprising:
   a pre-trained neural network to receive data;
   determining at said pre-trained neural network one or more confidence levels based on said data, wherein each of said one or more confidence levels is associated with a class and an evaluation band;
   comparing said determined one or more confidence levels with their associated evaluation bands;
   if at least one of said determined one or more confidence levels falls within its associated evaluation band:
      at a reclassification unit, collecting said determined one or more confidence levels and said data for reclassification; and
      upon reclassification, adapting said pre-trained neural network by transfer learning using said reclassification;
   if at least one of said determined one or more confidence levels is higher than its associated evaluation band, said class associated with said exceeding one or more determined confidence levels is output;
   if all of said one or more confidence levels are lower than said associated evaluation band, said confidence levels and said data are collected as unclassifiable.
15. The system of aspect 14, wherein said reclassification is a machine-based reclassification or a human reclassification.
16. The system of aspect 14, comprising preprocessing said data before said determining of said one or more confidence levels.
17. The system of aspect 14, wherein said pre-trained neural network can be a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.
18. The system of aspect 14, comprising determining said one or more confidence levels by determining a probability that said data belongs to said associated class.
19. The system of aspect 14, wherein said one or more classes may be mutually exclusive.
20. The system of aspect 14, wherein said one or more evaluation bands may be defined by a deviation from a nominal threshold.
21.The system of aspect 14, comprising generating a new class based on said transfer learning comprising training said new class on said data.
22.The system of aspect 14, wherein adapting said pre-trained neural network by transfer learning comprises feeding features to said pre-trained neural network, and/or fine-tuning one or more layers of said pre-trained neural network.
23. The system of aspect 14, wherein adapting said pre-trained neural network by transfer learning comprises training said pre-trained neural network on said reclassified data.
24. The system of aspect 14, wherein adapting said pre-trained neural network by transfer learning comprises optimizing said pre-trained neural network for a performance indicator, wherein said performance indicator is a learning rate, a rate of false positives, a measure of accuracy, a recall rate, an error function, and/or an inference time.
25. The system of aspect 14, comprising analyzing said unclassifiable data and said associated confidence levels for patterns that suggest novel classes for said unclassifiable data.
26. The system of aspect 14, modifying said evaluation bands to adapt said classes based on said data.

Implementations as described herein may relate to the following: A classification method and system, to data at a pre-trained neural network. The pre-trained neural network may determine one or more confidence levels based on the data. Each of the one or more confidence levels may be associated with a class and an evaluation band. If at least one of the determined one or more confidence levels falls within its associated evaluation band the determined one or more confidence levels and the data may be collected for reclassification and adapting the pre-trained neural network by transfer learning.

The present application claims priority of U.S. Patent Application No. 18/620,288, filed March 28, 2024. The entire disclosure of this application is hereby explicitly incorporated by reference into the present application.

The present disclosure includes reference to certain examples, however, it will be understood by those skilled in the art that various changes may be made and equivalents may be substituted without departing from the scope of the disclosure. In addition, modifications may be made to the disclosed examples without departing from the scope of the present disclosure. Therefore, it is intended that the present disclosure not be limited to the examples disclosed, but that the disclosure will include all examples falling within the scope of the appended claims.

## Claims

1. A classification method, said method comprising:
receiving data at a pre-trained neural network;
determining at said pre-trained neural network one or more confidence levels based on said data, wherein each of said one or more confidence levels is associated with a class and an evaluation band;
comparing said determined one or more confidence levels with their associated evaluation bands;
if at least one of said determined one or more confidence levels falls within its associated evaluation band:
collecting said determined one or more confidence levels and said data for reclassification; and
upon reclassification, adapting said pre-trained neural network by transfer learning using said reclassification;
if at least one of said determined one or more confidence levels is higher than its associated evaluation band, said class associated with said exceeding one or more determined confidence levels is output;
if all of said one or more confidence levels are lower than said associated evaluation band, said confidence levels and said data are collected as unclassifiable.

2. The method of claim 1, comprising preprocessing said data before said determining of said one or more confidence levels;

3. The method of any one of the preceding claims, wherein
a) said reclassification is a machine-based reclassification or a human reclassification, and/or wherein
b) said pre-trained neural network is a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network.

4. The method of any one of the preceding claims, comprising determining said one or more confidence levels by determining a probability that said data belongs to said associated class.

5. The method of any one of the preceding claims, wherein said one or more classes are mutually exclusive.

6. The method of any one of the preceding claims, wherein said one or more evaluation bands are defined by a deviation from a nominal threshold.

7. The method of any one of the preceding claims, comprising generating a new class based on said transfer learning and comprising training said new class on said data.

8. The method of any one of the preceding claims, wherein adapting said pre-trained neural network by transfer learning comprises
a) feeding features to said pre-trained neural network, and/or fine-tuning one or more layers of said pre-trained neural network, and/or
b) training said pre-trained neural network on said reclassified data, and/or
c) optimizing said pre-trained neural network for a performance indicator, wherein said performance indicator is a learning rate, a rate of false positives, a measure of accuracy, a recall rate, an error function, and/or an inference time.

9. The method of any one of the preceding claims, comprising analyzing said unclassifiable data and said associated confidence levels for patterns that suggest novel classes for said unclassifiable data.

10. The method of any one of the preceding claims, comprising modifying said evaluation bands to adapt said classes based on said data.

11. A classification system, said system comprising:
a pre-trained neural network to receive data, wherein the system is configured to:
determining at said pre-trained neural network one or more confidence levels based on said data, wherein each of said one or more confidence levels is associated with a class and an evaluation band;
comparing said determined one or more confidence levels with their associated evaluation bands;
if at least one of said determined one or more confidence levels falls within its associated evaluation band:
at a reclassification unit, collecting said determined one or more confidence levels and said data for reclassification; and
upon reclassification, adapting said pre-trained neural network by transfer learning using said reclassification;
if at least one of said determined one or more confidence levels is higher than its associated evaluation band, said class associated with said exceeding one or more determined confidence levels is output;
if all of said one or more confidence levels are lower than said associated evaluation band, said confidence levels and said data are collected as unclassifiable.

12. The system of claim 11, wherein
a) said reclassification is a machine-based reclassification or a human reclassification, and/or wherein
b) the system is configured for preprocessing said data before said determining of said one or more confidence levels, and/or wherein
c) said pre-trained neural network is a Feedforward Neural Network, a Convolutional Neural Network, a Recurrent Neural Network, a Long Short Term Memory Network, a Gated Recurrent Unit Network, a Transformer Network, a Capsule Network, an Autoencoder, a Variational Autoencoder, or a Graph Neural Network, and/or wherein
d) the system is configured for determining said one or more confidence levels by determining a probability that said data belongs to said associated class, and/or wherein
e) said one or more classes are mutually exclusive, and/or wherein
f) said one or more evaluation bands are defined by a deviation from a nominal threshold, and/or wherein
g) the system is configured for generating a new class based on said transfer learning and for training said new class on said data.

13. The system of claim 11 or 12, wherein adapting said pre-trained neural network by transfer learning comprises
a) feeding features to said pre-trained neural network, and/or fine-tuning one or more layers of said pre-trained neural network, and/or
b) training said pre-trained neural network on said reclassified data.

14. The system of any one of claims 11 to 13, wherein
a) adapting said pre-trained neural network by transfer learning comprises optimizing said pre-trained neural network for a performance indicator, wherein said performance indicator is a learning rate, a rate of false positives, a measure of accuracy, a recall rate, an error function, and/or an inference time, and/or wherein
b) the system is configured for analyzing said unclassifiable data and said associated confidence levels for patterns that suggest novel classes for said unclassifiable data.

15. The system of any one of claims 11 to 14, wherein the system is configured for modifying said evaluation bands to adapt said classes based on said data.
